# EUROPÄISCHE PATENTSCHRIFT

(11) **EP 2 215 138 B1**
(45) Veröffentlichungstag und Bekanntmachung des Hinweises auf die Patenterteilung: **13.03.2013**
(21) Anmeldenummer: 08855271.6
(22) Anmeldetag: 25.11.2008
(51) Int. Cl.: C08G 18/28, C08G 18/42, C08K 5/12

(54) **POLYURETHANINTEGRALSCHAUMSTOFFE ENTHALTEND CYCLOHEXANDICARBONSÄUREDIALKYLESTER ALS INTERNES TRENNMITTEL**
POLYURETHANE INTEGRAL FOAMS CONTAINING CYCLOHEXANE DICARBOXYLIC ACID DIALKYL ESTERS AS AN INTERNAL RELEASE AGENT
MOUSSE DE POLYURÉTHANE INTÉGRALE CONTENANT UN DIALKYLESTER D'ACIDE CYCLOHEXANEDICARBOXYLIQUE COMME AGENT DE DÉMOULAGE INTERNE

(30) Priorität: 26.11.2007 EP 07121515
(43) Veröffentlichungstag der Anmeldung: 11.08.2010
(73) Patentinhaber: BASF SE, 67056 Ludwigshafen (DE)
(72) Erfinder: ORTALDA, Marco, I-10137 Torino (IT); SPITILLI, Tony, I-10147 Torino (IT)
(86) Internationale Anmeldenummer: PCT/EP2008/066119
(87) Internationale Veröffentlichungsnummer: WO 2009/068515

(56) Entgegenhaltungen:
- EP-A- 0 297 519
- DE-A1- 10 303 172
- US-A- 3 440 224
- US-A- 4 487 853

## Beschreibung

Die vorliegende Erfindung betrifft ein Verfahren zur Herstellung von Polyurethanintegralschaumstoffen bei dem man a) organische Polyisocyanate mit b) höhermolekularen Verbindungen mit mindestens zwei reaktiven Wasserstoffatomen, c) Treibmitteln, d) Cyclohexandicarbonsäuredialkylestern und gegebenenfalls e) Kettenverlängerungsmitteln und/oder Vernetzungsmitteln, f) Katalysatoren und g) sonstigen Hilfsmitteln und/oder Zusatzstoffen zu einer Reaktionsmischung vermischt, in eine Form gibt und zu einem Polyurethanintegralschaumstoff ausreagieren lässt. Weiter betrifft die vorliegende Erfindung Polyurethanintegralschaumstoffe, enthaltend Cyclohexandicarbonsäuredialkylester, die Verwendung von solchen Polyurethanintegralschaumstoffen im Innern von Verkehrsmitteln oder als Schuhsohle und die Verwendung von Cyclohexandicarbonsäuredialkylestern als interne Trennmittel bei der Herstellung von Polyurethanintegralschaumstoffen.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

Bei Polyurethanintegralschaumstoffen handelt es sich um Polyurethanformkörper mit kompakter Oberfläche und zelligem Kern. Polyurethanintegralschaumstoffe und ihre Herstellung sind seit langem bekannt und beispielsweise in Modern Shoemaking No.61: Solings, November 2001, Stephen Abbott and Mike George, Satra Technology Centre 2001 beschrieben. Polyurethanintegralschaumstoffe werden in unterschiedlichen Bereichen eingesetzt. Eine typische Verwendung ist die als Schuhsohle, zum Beispiel für Straßenschuhe, Sportschuhe, Sandalen und Stiefel aber auch im Bereich von Automobilinnenausstattung, beispielsweise als Lenkräder, Kopfstützen oder Schaltknöpfe. Weitere mögliche Anwendungen sind die als Stuhlarmlehnen oder als Motorradsitze.

Üblicherweise enthält die Reaktionsmischung zur Herstellung von Polyurethanintegralschaumstoffen interne Formtrennmittel, damit die hergestellten Formkörper leichter aus der Form entnommen werden können. Dadurch werden auch Defekte am Polyurethanintegralschaumstoff, die durch Anhaften an der Form entstehen können, vermieden. Als interne Formtrennmittel sind Dimethylsiloxane, Ester von gesättigten bzw. ungesättigten, langkettigen Fettsäuren, wie Ester von Stearinsäure oder Ölsäuren und Dialkylphtalate bekannt.

Durch die Zugabe von Polydimethylsiloxanen oder von Fettsäureester zur Reaktionsmischung zur Herstellung von Polyurethanintegralschaumstoffen kommt es zu Störungen bei der Schaumbildung. Der Einsatz dieser internen Trennmittel führt zu einer unerwünschten Grobzelligkeit und beeinträchtigt die Bildung der für die Polyurethanintegralschaumstoffe wichtigen kompakten Außenhaut. Weiter werden die mechanischen Eigenschaften des Integralschaums, wie Härte, Zugfestigkeit und Reißdehnung sowie das Hydrolyseverhalten negativ beeinflusst.

Dialkylphthalate sind hochwirksame Trennmittel, die oben genannte negative Einflüsse auf die Zellstruktur und die Hautbildung der Polyurethanintegralschaumstoffe nicht zeigen. Ihr Einsatz ist allerdings aus Umwelt- bzw. Gesundheitsgründen zum Teil verboten.

Aufgabe der vorliegenden Erfindung war es daher ein Verfahren zur Herstellung von Polyurethanintegralschaumstoffen zu liefern, bei dem die Zellstruktur und die Bildung der Außenhaut der herzustellenden Polyurethanintegralschaumstoffe nicht negativ beeinflusst werden.

Ebenso war es Aufgabe der vorliegenden Erfindung, Polyurethanintegralschaumstoffe zu liefern, die hervorragende mechanische Eigenschaften, wie Härte, Zugfestigkeit und maximale Reißdehnung , auch nach Hydrolysealterung, aufweisen.

Die erfindungsgemäße Aufgabe wurde überraschenderweise durch ein Verfahren gelöst, bei dem man a) organische Polyisocyanate mit b) höhermolekularen Verbindungen mit mindestens zwei reaktiven Wasserstoffatomen, c) Treibmitteln, d) Cyclohexandicarbonsäuredialkylestern und gegebenenfalls e) Kettenverlängerungsmitteln und/oder Vernetzungsmitteln, f) Katalysatoren und g) sonstigen Hilfsmitteln und/oder Zusatzstoffen zu einer Reaktionsmischung vermischt, in eine Form gibt und zu einem Polyurethanintegralschaumstoff ausreagieren lässt.

Weiter wird die erfindungsgemäße Aufgabe durch einen Polyurethanintegralschaumstoff, erhältlich nach einem erfindungsgemäßen Verfahren.

Als Polyurethanintegralschaumstoffe im Sinn der Erfindung werden PolyurethanSchaumstoffe nach DIN 7726 mit einer Randzone, die bedingt durch den Formgebungsprozess eine höhere Dichte als der Kern aufweist, verstanden. Die über den Kern und die Randzone gemittelte Gesamtrohdichte liegt dabei vorzugsweise über 0,08 g/cm³, besonders bevorzugt von 0,15 bis 0,80 g/cm³ und insbesondere von 0,25 bis 0,70 g/cm³.

Die zur Herstellung der erfindungsgemäßen Polyurethanintegralschaumstoffe verwendeten organischen und/oder modifizierten Polyisocyanate (a) umfassen die aus dem Stand der Technik bekannten aliphatischen, cycloaliphatischen und aromatischen zwei- oder mehrwertigen Isocyanate (Bestandteil a-1) sowie beliebige Mischungen daraus. Beispiele sind 4,4'-Metandiphenyldiisocyanat, 2,4'-Metandiphenyldiisocyanat, die Mischungen aus monomeren Metandiphenyldiisocyanaten und höherkernigen Homologen des Metandiphenyldiisocyanats (Polymer-MDI), Tetramethylendiisocyanat, Hexamethylendiisocyanat (HDI), Isophorondiisocyanat (IPDI), 2,4- oder 2,6-Toluylendiisocyanat (TDI) oder Mischungen der genannten Isocyanate.

Bevorzugt wird 4,4'-MDI verwendet. Das bevorzugt verwendete 4,4'-MDI kann 0 bis 20 Gew.-% 2,4' MDI und geringe Mengen, bis etwa 10 Gew.-%, allophanat- oder uretoniminmodifizierte Polyisocyanate enthalten. Es können auch geringe Mengen Polyphenylenpolymethylenpolyisocyanat (Polymer-MDI) eingesetzt werden. Die Gesamtmenge dieser hochfunktionellen Polyisocyanate sollte 5 Gew.-% des eingesetzten Isocyanats nicht überschreiten.

Die Polyisocyanatkomponente (a) wird bevorzugt in Form von Polyisocyanatprepolymeren eingesetzt. Diese Polyisocyanatprepolymere sind erhältlich, indem vorstehend beschriebene Polyisocyanate (a-1), beispielsweise bei Temperaturen von 30 bis 100 °C, bevorzugt bei etwa 80 °C, mit Polyolen (a-2), zum Prepolymer umgesetzt werden.

Polyole (a-2) sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei als Polyole (a-2) die unter b) beschriebenen hochmolekularen Verbindungen mit gegenüber Isocyanate reaktiven Wasserstoffatomen eingesetzt.

Gegebenenfalls werden den genannten Polyolen bei der Herstellung der Isocyanatprepolymere übliche Kettenverlängerer oder Vernetzungsmittel zugegeben. Solche Substanzen sind im folgenden unter e) beschrieben.

Höhermolekulare Verbindungen b) mit mindestens zwei gegen Isocyanatgruppen reaktiven Wasserstoffatomen können beispielsweise Polyetherole oder Polyesterole sein.

Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 3 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Weiter können als Katalysatoren auch Multimetallcyanidverbindungen, sogenannte DMC-Katalysatoren, eingesetzt werden. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen.

Als Startermolekül kommen Wasser oder 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan in Betracht.

Die Polyetherpolyole, vorzugsweise Polyoxypropylen-polyoxyethylen-polyole, besitzen vorzugsweise eine Funktionalität von 2 bis 3 und Molekulargewichte von 1.000 bis 8.000, vorzugsweise von 2.000 bis 6.000 g/mol.

Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 :1 bis 1,8, vorzugsweise 1 :1,05 bis 1,2 polykondensiert.

Die erhaltenen Polyesterpolyole besitzen vorzugsweise eine Funktionalität von 2 bis 4, insbesondere von 2 bis 3, und ein Molekulargewicht von 480 bis 3000, vorzugsweise 1000 bis 3000 g/mol.

Als höhermolekulare Verbindungen b) mit mindestens zwei gegenüber Isocyanat reaktiven Wasserstoffatomen eignen sich ferner polymermodifizierte Polyole, vorzugsweise polymermodifizierte Polyesterole oder Polyetherole, besonders bevorzugt Pfropf-Polyether- bzw. Pfropf-Polyesterole, insbesondere Pfropf-Polyetherole. Hierbei handelt es sich um ein sogenanntes Polymerpolyol, welches üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-%, aufweist. Diese Polymerpolyesterole sind beispielsweise in WO 05/098763 und EP-A 250 351 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyesterol hergestellt. Die Seitenketten entstehen im allgemeinen durch Übertragung der Radikale von wachsenden Polymerketten auf Polyesterole oder Polyetherole. Das Polymer-Polyol enthält neben dem Propfcopolymerisaten überwiegend die Homopolymere der Olefine, dispergiert in unverändertem Polyesterol bzw. Polyetherol.

In einer bevorzugten Ausführungsform werden als Monomere Acrylnitril, Styrol, Acrylnitril und Styrol, insbesondere bevorzugt ausschließlich Styrol verwendet. Die Monomere werden gegebenenfalls in Gegenwart weiterer Monomere, eines Makromers, eines Moderators und unter Einsatz eines Radikal-Initiators, meist Azo- oder Peroxidverbindungen, in einem Polyesterol oder Polyetherol als kontinuierlicher Phase polymerisiert. Dieses Verfahren ist beispielsweise in DE 111 394, US 3 304 273,

US 3 383 351, US 3 523 093, DE 1 152 536 und DE 1 152 537 beschrieben.

Während der radikalischen Polymerisation werden die Makromere mit in die Copolymerkette eingebaut. Dadurch bilden sich Blockcopolymere mit einem Polyester- bzw. Polyether- und einem Poly-acrylnitril-styrol-Block, welche in der Grenzfläche von kontinuierlicher Phase und dispergierter Phase als Phasenvermittler wirken und das Agglomerieren der Polymerpolyesterolpartikel unterdrücken. Der Anteil der Makromere beträgt üblicherweise 1 bis 20 Gew.-%, bezogen auf das Gesamtgewicht der zur Herstellung des Polymerpolyols eingesetzten Monomere.

Ist in der höhermolekularen Verbindung b) Polymerpolyol enthalten, liegt dies vorzugsweise zusammen mit weiteren Polyolen vor, beispielsweise Polyetherolen, Polyesterolen oder Mischungen aus Polyetherolen und Polyesterolen. Besonders bevorzugt ist der Anteil an Polymerpolyol größer als 5 Gew.-%, bezogen auf das Gesamtgewicht der Komponente (b). Die Polymerpolyole können beispielsweise, bezogen auf das Gesamtgewicht der Komponente (b) in einer Menge von 7 bis 90 Gew.-%, oder von 11 bis 80 Gew.-% enthalten sein. Besonders bevorzugt handelt es sich bei dem Polymerpolyol um Polymerpolyesterol oder Polymerpolyetherol.

Ferner sind bei der Herstellung von Polyurethanintegralschaumstoffen Treibmittel (c) zugegen. Diese Treibmittel c) können Wasser enthalten. Als Treibmittel (c) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale oder Mischungen daraus, beispielsweise (cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC. In einer bevorzugten Ausführungsform wird als Treibmittel eine Mischung enthaltend mindestens eines dieser Treibmittel und Wasser eingesetzt, insbesondere Wasser als alleiniges Treibmittel. Wird kein Wasser als Treibmittel eingesetzt, werden vorzugsweise ausschließlich physikalische Treibmittel verwendet.

Der Gehalt an Wasser beträgt in einer bevorzugten Ausführungsform von 0,1 bis 2 Gew.-%, bevorzugt 0,2 bis 1,5 Gew.-%, besonders bevorzugt 0,3 bis 1,2 Gew.-%, insbesondere 0,4 bis 1 Gew.-%, bezogen auf das Gesamtgewicht der Komponenten (a) bis (g).

In einer weiteren bevorzugten Ausführungsform werden der Umsetzung der Komponenten (a) bis (e) und gegebenenfalls (f) und (g) als zusätzliches Treibmittel Mikrohohlkugeln, die physikalisches Treibmittel enthalten, zugegeben. Die Mikrohohlkugeln können auch im Gemisch mit den vorstehend genannten Treibmitteln eingesetzt werden.

Die Mikrohohlkugeln bestehen üblicherweise aus einer Hülle aus thermoplastischem Polymer und sind im Kern mit einer flüssigen, niedrig siedenden Substanz auf Basis von Alkanen gefüllt. Die Herstellung solcher Mikrohohlkugeln ist beispielsweise in US 3 615 972 beschrieben. Die Mikrohohlkugeln weisen im allgemeinen einen Durchmesser von 5 bis 50 µm auf. Beispiele für geeignete Mikrohohlkugeln sind unter dem Handelsnamen Expancell^{®} der Firma Akzo Nobel erhältlich.

Die Mikrohohlkugeln werden im allgemeinen in einer Menge von 0,5 bis 5 Gew.-%, bezogen auf das Gesamtgewicht der Komponenten (b), (c) und (d) zugesetzt.

Als Cyclohexandicarbonsäuredialkylester d) werden vorzugsweise 1,2- Cyclohexandicarbonsäuredialkylester eingesetzt. Vorzugsweise handelt es sich bei den Alkylresten der Cyclohexandicarbonsäuredialkylester d) um gesättigte oder ungesättigte, geradkettige oder verzweigtkettige aliphatische oder cycloaliphatische Kohlenwasserstoffe mit jeweils 3 bis 30 Kohlenstoffatomen. Gegebenenfalls können die Alkylreste im Cyclohexandicarbonsäuredialkylester auch durch kovalente Bindung verbunden sein. Besonders bevorzugt handelt es sich bei den Alkylresten um gesättigte, geradkettige aliphatische Kohlenwasserstoffe mit jeweils 5 bis 20, noch bevorzugter 7 bis 15 Kohlenstoffatomen. Dabei sind insbesondere die beiden Alkylreste jeweils gleich lang. Beispielsweise kann als Cyclohexandicarbonsäuredialkylester1,2-Cyclohexandicarbonsäure-dinonylester eingesetzt werden.

Vorzugsweise werden Cyclohexandicarbonsäuredialkylester d) in Mengen von 1 bis 20, besonders bevorzugt 2 bis 15 und insbesondere 3 bis 10 Gew.-%, bezogen auf das Gesamtgewicht der Komponenten a) bis g), eingesetzt.

Als Kettenverlängerungsmittel und/oder Vernetzungsmittel (e) werden Substanzen mit einem Molekulargewicht von vorzugsweise kleiner 500 g/mol, besonders bevorzugt von 60 bis 400 g/mol eingesetzt, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder bevorzugt in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerer (c) Monoethylenglycol, 1,4-Butandiol, Glycerin oder Mischungen davon eingesetzt.

Sofern Kettenverlängerungsmittel, Vernetzungsmittel oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten (b) und (e), zum Einsatz.

Als Katalysatoren (f) zur Herstellung der Polyurethanschaumstoffe werden bevorzugt Verbindungen verwendet, welche die Reaktion der Hydroxylgruppen enthaltenden Verbindungen der Komponente (b) und gegebenenfalls (e) mit den organischen, gegebenenfalls modifizierten Polyisocyanaten (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinnmaleat und Dioctylzinn-diacetat, sowie Bismutcarboxylate, wie Bismut(III)-neo-decanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Vorzugsweise verwendet werden 0,001 bis 5 Gew.-%, insbesondere 0,05 bis 2 Gew.-% Katalysator bzw. Katalysatorkombination, bezogen auf das Gewicht der Komponente (b).

Der Reaktionsmischung zur Herstellung der Polyurethanschäume können gegebenenfalls auch noch Hilfsmittel und/oder Zusatzstoffe (g) zugegeben werden. Genannt seien beispielsweise oberflächenaktive Substanzen, Schaumstabilisatoren, Zellregler, weitere Trennmittel, Füllstoffe, Farbstoffe, Pigmente, Hydrolyseschutzmittel, geruchsabsorbierende Substanzen und fungistatische und/oder bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), eingesetzt.

Als geeignete weitere Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart. Vorzugsweise enthalten erfindungsgemäße Reaktionsmischungen keine weiteren Trennmittel.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Russ, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), zugegeben, wobei jedoch der Gehalt an Matten, Vliesen und Geweben aus natürlichen und synthetischen Fasern Werte bis 80 Gew.-% erreichen kann.

Die Komponenten (a) bis (g) werden zur Herstellung eines erfindungsgemäßen Polyurethanintegralschaumstoffs in solchen Mengen miteinander vermischt, dass das Äquivalenzverhältnis von NCO-Gruppen der Polyisocyanate (a) zur Summe der reaktiven Wasserstoffatome der Komponenten (b), (c) und (d) 1 : 0,8 bis 1 : 1,25, vorzugsweise 1 : 0,9 bis 1 : 1,15 beträgt.

Die erfindungsgemäßen Polyurethanintegralschaumstoffe werden vorzugsweise nach dem one-shot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff", Carl-Hanser-Verlag, München, Wien, 1975, oder im "Kunststoffhandbuch", Band 7, Polyurethane, 3. Auflage, 1993, Kapitel 7.

Die Ausgangskomponenten (a) bis (g) werden dazu vorzugsweise bei einer Temperatur von 15 bis 90 °C, besonders bevorzugt von 25 bis 55 °C gemischt und die Reaktionsmischung gegebenenfalls unter erhöhtem Druck in das geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160 °C, vorzugsweise 30 bis 120 °C, besonders bevorzugt 30 bis 60 °C. Dabei wird im Rahmen der Erfindung die Mischung der Komponenten (a) bis (g) bei Reaktionsumsätzen kleiner 90 %, bezogen auf die Isocyanatgruppen, als Reaktionsmischung bezeichnet.

Die Menge der in das Formwerkzeug eingebrachten Reaktionsmischung wird so bemessen, dass die erhaltenen Formkörper aus Integralschaumstoffen eine Dichte von vorzugsweise 0,08 bis 0,90 g/cm³, besonders bevorzugt von 0,15 bis 0,80 g/cm³ und insbesondere von 0,25 bis 0,70 g/cm³ aufweisen. Die Verdichtungsgrade zur Herstellung der erfindungsgemäßen Polyurethanintegralschaumstoffe liegen im Bereich von 1,1 bis 8,5, vorzugsweise von 2,1 bis 7,0.

Gegenstand der vorliegenden Erfindung ist weiter ein Polyurethanintegralschaumstoff, erhältlich nach einem erfindungsgemäßen Verfahren. Solche erfindungsgemäßen Polyurethanintegralschaumstoffe werden vorzugsweise als Schuhsohle, zum Beispiel für Straßenschuhe, Sportschuhe, Sandalen und Stiefel aber auch im Innenbereich von Verkehrsmitteln beispielsweise in Autos als Lenkräder, Kopfstützen oder Schaltknöpfe oder als Stuhlarmlehnen verwendet. Weitere Verwendungsmöglichkeiten sind als Armlehne für Stühle oder als Motorradsitze. Besonders bevorzugt werden erfindungsgemäße Polyurethanintegralschaumstoffe als Schuhsohlen oder im Automobilinnenraum eingesetzt.

Ein weiterer Gegenstand der vorliegenden Erfindung ist die Verwendung der unter f) beschriebenen Cyclohexandicarbonsäuredialkylester als interne Trennmittel bei der Herstellung von Polyurethanintegralschaumstoffen.

Im Folgenden soll die Erfindung anhand von Beispielen erläutert werden.

Gemäß Tabelle 1 wurden jeweils die A-Komponente und die B-Komponente hergestellt, die anschließend bei einem Isocyanatindex von 100 miteinender vermischt und in eine geschlossene Form gegeben, so dass Formteile mit einer mittleren Dichte von 550g/L erhalten wurden.

**Tabelle 1**

| | V 1. | V2 | V 3 | V4 | Beispiel 1 |
|---|---|---|---|---|---|
| A-Komponente | | | | | |
| Polyol 1 | 79,47 | 86,47 | 88,47 | 82,47 | 86,47 |
| Monoethylenglycol | 6,5 | 6,5 | 6,5 | 6,5 | 6,5 |
| Katalysator | 1,7 | 1,7 | 1,7 | 1,7 | 1,7 |
| Antistatikum | 2 | 2 | 2 | 2 | 2 |
| Wasser | 0,33 | 0,33 | 0,33 | 0,33 | 0,33 |
| IMR 1 | 10 | 0 | 0 | 0 | 0 |
| IMR 2 | 0 | 3 | 0 | 0 | 0 |
| IMR 3 | 0 | 0 | 1 | 0 | 0 |
| IMR 4 | 0 | 0 | 0 | 3 | 0 |
| IMR 5 | 0 | 0 | 0 | 0 | 7 |
| Summe A Komponente | 100 | 100 | 100 | 100 | 100 |

| B-Komponente (NCO-Gehalt = 16%) | | | | | |
|---|---|---|---|---|---|
| 4,4-MDI | 49 | 49 | 49 | 49 | 49 |
| uretoniminmodifiziertes MDI | 4 | 4 | 4 | 4 | 4 |
| Polyol 2 | 29 | 29 | 29 | 29 | 29 |
| Polyol 3 | 10 | 10 | 10 | 10 | 10 |
| γ-Butyrolacton | 7 | 7 | 7 | 7 | 7 |
| Diethyloxalat | 1 | 1 | 1 | 1 | 1 |
| Summe B-Komponente | 100 | 100 | 100 | 100 | 100 |

| | | | | | |
|---|---|---|---|---|---|
| Polyol 1: Polyesterol auf Basis von Adipinsäure, Monoethylenglycol und Diethylenglycol; gewichtsmittleres Molekulargewicht 2000 g/mol Polyol 2: Polyesterol auf Basis von Adipinsäure, Monoethylenglycol und 1,4-Butandiol; gewichtsmittleres Molekulargewicht 2000 g/mol Polyol 3: Polyesterol auf Basis von Adipinsäure, Monoethylenglycol, Diethylenglycol und Trimethylolpropan; gewichtsmittleres Molekulargewicht 2500 g/mol Katalysator: 33 Gew.-%Tetraethylendiamin in Monoethylenglycol Antistatikum: Ammoniumsalz in Monoethylenglycol IMR 1: Internes Trennmittel Radia® 7171 der Firma Oleon, Ester aus Ölsäure und Pentaerythrit, empfohlene Dosierung 8 bis 12 Gew.-% der A-Komponente IMR 2: Internes Trennmittel, Amid der Ölsäure und aliphatischer Amine, empfohlene Dosierung 2 bis 4 Gew.-% der A-Komponente IMR 3: Internes Trennmittel Dow Corning® 1248 Fluid der Firma Dow Corning, Dimethylsiloxan, funktionalisiert durch Aufpfropfen von Glycol, empfohlene Dosierung 1 bis 2 Gew.-% der A-Komponente IMR 4: Epoxidiertes Sojaöl, empfohlene Dosierung 2 bis 4 Gew.-% der A-Komponente IMR 5: Hexamoll DINCH® der BASF AG, Düsononylcyclohexandicarboxylat | | | | | |

Von den so erhaltenen Polyurethanintegralschaumstoffen wurden die Härte nach DIN 53505, die Zugfestigkeit und die Reißdehnung gemäß DIN 53504 vor und nach 7 Tagen Hydrolysealterung des Integralschaumstoffs bei 70 °C und 95 % relativer Feuchte bestimmt. Die erhaltenen Daten und die Zellstruktur im Kern der Schaumstoffe und die maximale Anzahl an Entformungen ohne weitere Zugabe an externem Trennmittel sind in Tabelle 2 angegeben. Dazu wurde in eine gereinigte Form einmal externes Trennmittel gegeben. Anschließend wurden ohne weitere Zugabe von externem Trennmittel Prüfplatten produziert und die Anzahl an Prüfplatten ermittelt, die ohne Anhaften herstellbar waren.

**Tabelle 2**

| | V1 | V2 | V3 | V4 | Beispiel 1 |
|---|---|---|---|---|---|
| Härte (Shore A) | 43 | 43 | nicht messbar | 42 | 45 |
| Härte nach Hydrolyse | 41 | 35 | nicht messbar | 40 | 44 |
| | | | nicht messbar | | |
| Zugfestigkeit [N/mm2] | 5 | 5,2 | nicht messbar | 4,8 | 5,4 |
| Zugfestigkeit nach Hydrolyse [N/mm2] | 5,5 | 3,5 | nicht messbar | 4,5 | 6,4 |
| | | | nicht messbar | | |
| Reißdehnung [%) | 470 | 480 | nicht messbar | 370 | 490 |
| Reißdehnung Hydrolyse [%] | 520 | 370 | nicht messbar | 420 | 532 |
| | | | | | |
| Zellstruktur | grob | fein | Sehr grob, schlechte Hautausbildung | fein | fein, sehr homogen |
| max. Anzahl Entformungen | 4 | 2 | 2 | 1 | 4 |

Bei Einsatz von Silikon als Trennmittel waren die mechanischen Eigenschaften des Schaums aufgrund der schlechten Schaumstruktur nicht zu bestimmen. Schaumstoffe mit epoxidiertern Sojaöl als Trennmittel zeigen zwar die gewünschte feine Zellstruktur, allerdings ist bei Verwendung dieses internen Trennmittels nur eine Entformung ohne Verwendung Zusätzlichen externen Trennmittels möglich und der erhaltene Formkörper ist brüchig. Dies wird vor allem anhand der schlechten Werten für die Zugfestigkeit und Reißdehnung deutlich. Ester von Ölsäure und Pentaerythrit zeigen annehmbare mechanische Werte vor und nach Hydrolysealterung, haben aber eine unerwünschte, grobe Zellstruktur. Die Verwendung von Amiden aus Ölsäure und aliphatischen Aminen als internes Trennmittel führt zu Formkörpern mit sehr schlechten mechanischen Eigenschaften nach Hydrolysealterung. Bei Einsatz von und Diisononylcyclohexandicarboxylat als internes Trennmittel werden Prüfkörper mit sehr feiner und homogener Zellstruktur und exzellenten mechanischen Eigenschaften vor und nach Hydrolysealterung erhalten. Weiter zeigt Diisononylcyclohexandicarboxylat sehr gute Trenneigenschaften.

## Patentansprüche

1. Verfahren zur Herstellung von Polyurethanintegralschaumstoffen bei dem man
a) organische Polyisocyanate mit
b) Polyetherole, Polyesterole oder polymermodifizierte Polyole,
c) Treibmitteln,
d) Cyclohexandicarbonsäuredialkylestern und gegebenenfalls
e) Kettenverlängerungsmitteln und/oder Vernetzungsmitteln,
f) Katalysatoren und
g) sonstigen Hilfsmitteln und/oder Zusatzstoffen,
in solchen Mengen zu einer Reaktionsmischung vermischt, dass das Äquivalenzverhältnis von NCO-Gruppen der Polyisocyanate (a) zur Summe der reaktiven Wasserstoffatome der Komponenten (b), (c) und (d) 1 : 0,8 bis 1 : 1,25 beträgt, in eine Form gibt und zu einem Polyurethanintegralschaumstoff ausreagieren lässt.

2. Verfahren nach Anspruch 1. **dadurch gekennzeichnet, dass** als Cyclohexandicarbonsäuredialkylester 1,2- Cyclohexandicarbonsäuredialkylester enthalten sind.

3. Verfahren nach Anspruch 1 oder 2, **dadurch gekennzeichnet, dass** die Alkylreste im Cyclohexandicarbonsäuredialkylester c) jeweils 3 bis 30 Kohlenstoffatome enthalten.

4. Polyurethanintegralschaumstoff, erhältlich nach einem Verfahren gemäß Anspruch 1 bis 3.

5. Verwendung von Polyurethanintegralschaumstoffen nach Anspruch 4 in Innenräumen von Verkehrsmitteln.

6. Verwendung von Polyurethanintegralschaumstoffen nach Anspruch 4 als Schuhsohle.

7. Verwendung von Cyclohexandicarbonsäuredialkylestern als Trennmittel in Polyurethanintegralschaumstoffen.

## Claims

1. A process for producing integral polyurethane foams, in which
a) organic polyisocyanates are mixed with
b) polyetherols, polyesterols or polymer-modified polyols
c) blowing agents,
d) dialkyl cyclohexanedicarboxylates and optionally
e) chain extenders and/or crosslinkers,
f) catalysts and
g) other auxiliaries and/or additives
to form a reaction mixture in such amounts that the equivalence ratio of NCO groups of the polyisocyanates (a) to the sum of the reactive hydrogen atoms of the components (b), (c) and (d) is from 1:0.8 to 1:1.25, the reaction mixture is introduced into a mold and allowed to react to form an integral polyurethane foam.

2. The process according to claim 1, wherein dialkyl 1,2-cyclohexanedicarboxylates are comprised as dialkyl cyclohexanedicarboxylates.

3. The process according to claim 1 or 2, wherein the alkyl radicals in the dialkyl cyclohexanedicarboxylate c) each comprise from 3 to 30 carbon atoms.

4. An integral polyurethane foam which can be obtained by a process according to any of claims 1 to 3.

5. The use of integral polyurethane foams according to claim 4 in interiors of road vehicles.

6. The use of integral polyurethane foams according to claim 4 as shoe soles.

7. The use of dialkyl cyclohexanedicarboxylates as mold release agent in integral polyurethane foams.

## Revendications

1. Procédé pour la production de mousses intégrales de polyuréthane, dans lequel dans un moule on ajoute à un mélange réactionnel
a) des polyisocyanates organiques avec
b) des polyétherols, des polyesterols ou des polyols modifiés avec des polymères,
c) des agents d'expansion,
d) des cyclohexanedicarboxylates de dialkyle et éventuellement
e) des prolongateurs de chaîne et/ou des agents de réticulation,
f) des catalyseurs et
g) d'autres adjuvants et/ou des additifs,
en des quantités telles que le rapport d'équivalents des groupes NCO des polyisocyanates (a) à la somme des atomes d'hydrogène réactifs des composants (b), (c) et (d) vaille de 1 : 0,8 à 1 : 1,25, et on fait réagir complètement pour obtenir une mousse intégrale de polyuréthane.

2. Procédé selon la revendication 1, **caractérisé en ce que** des 1,2-cyclohexanedicarboxylates de dialkyle sont contenus en tant que cyclohexanedicarboxylates de dialkyle.

3. Procédé selon la revendication 1 ou 2, **caractérisé en ce que** les radicaux alkyle c) dans le cyclohexanedicarboxylate de dialkyle contiennent chacun de 3 à 30 atomes de carbone.

4. Mousse intégrale de polyuréthane, pouvant être obtenue conformément à un procédé selon l'une quelconque des revendications 1 à 3.

5. Utilisation de mousses intégrales de polyuréthane selon la revendication 4, dans des espaces intérieurs de moyens de transport.

6. Utilisation de mousses intégrales de polyuréthane selon la revendication 4, en tant que semelle de chaussure.

7. Utilisation de cyclohexanedicarboxylates de dialkyle en tant qu'agent de démoulage dans des mousses intégrales de polyuréthane.
